## Europäisches Patentamt
## European Patent Office
## Office européen des brevets

(11) Veröffentlichungsnummer : **0 082 410**
**B1**

(12) **EUROPÄISCHE PATENTSCHRIFT**

(45) Veröffentlichungstag der Patentschrift :
26.03.86

(21) Anmeldenummer : **82111360.2**

(22) Anmeldetag : **08.12.82**

(51) Int. Cl.⁴ : **H 04 B 15/00**, H 04 B   3/56

(54) **Schaltungsanordnung zur Unterdrückung von Signalen auf Leitungsabschnitten.**

(30) Priorität : **23.12.81 DE 3151143**

(43) Veröffentlichungstag der Anmeldung :
**29.06.83 Patentblatt 83/26**

(45) Bekanntmachung des Hinweises auf die Patenterteilung : **26.03.86 Patentblatt 86/13**

(84) Benannte Vertragsstaaten :
**AT CH DE FR GB IT LI SE**

(56) Entgegenhaltungen :
**DE-A- 2 202 896**
**DE-A- 2 253 861**
**DE-B- 1 147 267**
**GB-A- 1 237 029**
**GB-A- 1 271 129**
**GB-A- 2 048 622**

(73) Patentinhaber : **Siemens Aktiengesellschaft**
**Berlin und München Wittelsbacherplatz 2**
**D-8000 München 2 (DE)**

(72) Erfinder : **Frühauf, Waldemar, Dr. Dipl.-Ing.**
**Clausewitzstrasse 34**
**D-8500 Nürnberg (DE)**

Jouve, 18, rue St-Denis, 75001 Paris, France

**Beschreibung**

Die Erfindung betrifft eine Schaltungsanordnung zur Unterdrückung von Signalen auf Leitungsabschnitten, wobei an der Verbindungsstelle eines Leitungsabschnitts, auf dem die Signale auftreten, und eines Leitungsabschnitts, auf dem die Signale unterdrückt werden sollen, eine Induktionsspule seriell eingefügt.

Bei elektrischen Leitungen tritt häufig das Problem auf, daß auf einem Teil oder Abschnitt dieser Leitung beabsichtigt oder unbeabsichtigt Signale vorhanden sind, die jedoch aus technischen Gründen in ihren Ausbreitung auf diesen Leitungsabschnitt beschränkt bleiben sollen, da sie auf weiteren Abschnitten dieser Leitung zu unerwünschten oder störenden Wirkungen Anlaß geben. Solche Signale können beispielsweise reine Störsignale sein, die durch das Schalten von Lasten in dem damit signalbehafteten Leitungsabschnitten entstehen. Solche Signale können aber auch beispielsweise frequenz- oder amplitudenmodulierte Signale sein, die in diesem Leitungsabschnitt im weitesten Sinn für Kommunikationszwecke, also beispielsweise im Rahmen von an diesen Leitungsabschnitt gebundenen Wechselsprechanlagen oder auch Fernschaltanlagen zur Beeinflussung von Lasten, vorhanden sind. Unter elektrischen Leitungen werden alle Arten von elektrischen Leitungen verstanden, insbesondere auch Stromversorgungsleitungen, die beispielsweise außer ihrer reinen Energieübertragungs funktion für Zwecke der Kommunikation und damit Informationsübertragung genutzt werden.

Um nun solche Signale auf den Leitungsabschnitt ihrer Entstehung und gegebenenfalls Verwendung zu beschränken, und damit verbundene weitere Leitungsabschnitte von diesen Signalen möglichst freizuhalten, ist es üblich, zwischen den signalbehafteten Leitungsabschnitt und den von Signalen freizuhaltenden Leitungsabschnitt eine Induktionsspule in Form einer Drossel einzufügen, die als induktiver Widerstand den Übertritt der Signale aus dem signalbehafteten Leitungsabschnitt in einen weiteren Leitungsabschnitt weitgehend verhindert. Darüber hinaus ist es auch bekannt, zur Beschränkung von amplitudenmodulierten Trägerfrequenzsignalen auf einen Leitungsabschnitt frequenzselektive Trägerfrequenzsperren unter Verwendung einer Induktionsspule einzusetzen. Solche Induktionsspulen sind verhältnismäßig teuer, da sie zur Erreichung eines hinreichend hohen induktiven Widerstandes eine hohe Induktivität haben müssen. Besonders gravierend wird dieses Problem, wenn als elektrische Leitungen die Leitungen des elektrischen Stromversorgungsnetzes benutzt werden, da in diesem Fall der Fluß der elektrischen Energie über die Induktionsspule in den Leitungsabschnitt möglichst ungehindert erfolgen soll, damit der Wirkleistungsverbrauch in zumutbaren Grenzen bleibt. Dies ist nur erreichbar, wenn für die Induktionsspule Drähte erheblichen Leitungsquerschnittes eingesetzt werden. Dies führt dazu, daß die verwendbaren Induktionsspulen voluminös, schwer und teuer werden. Trägerfrequenzsperren lassen sich zwar kleiner halten, sind aber nur über einen sehr engen Frequenzbereich wirksam. Zudem läßt sich mit den vorbekannten Maßnahmen keine vollständige Abschirmung der vom Signal freizuhaltenden Leitungsabschnitte gegen die im Rahmen von Kommunikationszwecken und bei Schaltvorgängen auftretenden Signale des signalbehafteten Leitungsabschnittes erreichen. Als solcher signalbehafteter Leitungsabschnitt kommen beispielsweise alle in einer Wohnung, in einem Gebäude oder einer Gruppe von Gebäuden verlegten, der Stromversorgung dieser Einheiten dienenden Netzleitungen infrage.

Aus der GB-A-2 048 622 ist es bekannt, die Amplitude eines in einem Leiter fließenden Wechselstroms durch eine Vorrichtung zu reduzieren, die aus zwei Stromtransformatoren und einem rückgekoppelten Operationsverstärker besteht. Dabei wird einer der Stromtransformatoren zur Speisung des Operationsverstärkers verwendet. Der andere Stromtransformator speist den vom Operationsverstärker abgegebenen Strom gegenphasig wieder in den stromführenden Leiter ein. Damit wird der ursprünglich vorhandene Strom auf der gesamten Leitung reduziert. Eine Unterdrückung von Signalen auf einzelnen Leitungsabschnitten ist mit dieser bekannten Anordnung nicht möglich.

Der Erfindung liegt die Aufgabe zugrunde, eine Schaltungsanordnung der eingangs genannten Art anzugeben, die den Übertritt von Signalen aus einem Leitungsabschnitt auf einen anderen Leitungsabschnitt zuverlässig unterbindet, wobei Induktionsspulen geringerer Induktivität eingesetzt werden können und eine breitbandigere Abschirmwirkung erreichbar ist.

Die Aufgabe wird erfindungsgemäß dadurch gelöst, daß eine elektrische Kompensationseinrichtung vorgesehen ist, die an der Verbindungsstelle der Induktionsspule mit dem Leitungsabschnitt, auf dem die Signale zu unterdrücken sind, ein die Signale kompensierendes Kompensationssignal einspeist. Das in einem Leitungsabschnitt vorhandene Signal wird damit beim Durchgang durch die Induktionsspule bereits abgeschwächt. Der verbleibende Signalrest wird anschließend beim Erreichen des von den Signalen freizuhaltenden Leitungsabschnittes durch ein von der elektrischen Kompensationseinrichtung eingespeistes Kompensationssignal vollends auf den Wert Null reduziert. Das Kompensationssignal wird demzufolge gegenphasig zum Restsignal verlaufen. Dieses Kompensationssignal wird durch die Kompensationseinrichtung aus dem an der Verbindungsstelle von Induktionsspule und signalführendem Leitungsabschnitt anstehenden Signal ermittelt. Da die Induktionsspule nunmehr lediglich das Signal soweit abzuschwächen hat, daß die Kompensationseinrichtung das Restsignal zu unterdrücken vermag, kann die Induktionsspule gegenüber dem Stand der Technik eine kleinere Induktivität aufweisen. Ferner ist damit eine sehr breitbandige Unterdrückung der Signale ermöglicht, so daß auch die Eliminierung von breitbandigen Signalen erfolgreich möglich ist.

Eine bevorzugte Ausführungsform der Erfindung besteht darin, daß die Kompensationseinrichtung eine breitbandig abgleichbare Wheatstone'sche Brückenschaltung enthält, in deren erstem Brückenzweig die Induktionsspule und in deren zweitem, dazu parallelen Brückenzweig ein Kondensator angeordnet ist, wobei der die Störsignale aufweisende Leitungsabschnitt über einen dritten Brückenzweig mit dem einen Anschluß des Kondensators und der von den Signalen freizuhaltende Leitungsabschnitt über einen vierten Brückenzweig mit dem anderen Anschluß des Kondensators verbunden ist, daß die Kompensationseinrichtung ferner einen Differenzverstärker aufweist, dessen erster Eingang an das durch den Verknüpfungspunkt des zweiten und dritten Brückenzweigs gebildete eine Ende der Brückendiagonale und dessen Ausgang an den Verknüpfungspunkt des zweiten und vierten Brückenzweiges angeschlossen ist, und daß der zweite Eingang des Differenzverstärkers an eine Referenzspannung angeschlossen ist, die im Frequenzbereich der Signale den Wert Null aufweist. Die Anordnung der Induktionsspule sowie des Kondensators in zueinander parallelen Brückenzweigen führt dazu, daß eine breitbandig abgeglichene Brückenschaltung entsteht, das heißt, daß die für eine bestimmte Frequenz abgeglichene Brückenschaltung auch dann im abgeglichenen Zustand verbleibt, wenn Signale mit abweichender Frequenz auftreten. Der Differenzverstärker, für den vorzugsweise ein Operationsverstärker Einsatz findet, ist durch die breitbandkompensierte Brückenschaltung gegengekoppelt und hat die Leistung aufzubringen, die zur Kompensation des bereits durch die Induktionsspule abgeschwächten Signals noch erforderlich ist. Damit besteht eine Wechselbeziehung zwischen der Induktivität der Induktionsspule unter Ausgangsleistung des Differenzverstärkers derart, daß mit Verkleinerung der Induktivität der Induktionsspule eine Vergrößerung der Ausgangsleistung des Differenzverstärkers erforderlich wird. Die für die Kompensationseinrichtung notwendigen Bauelemente sind handelsüblich und mit geringem Kostenaufwand erhältlich.

Der dritte und vierte Brückenzweig kann jeweils zumindest einen ohmschen Widerstand enthalten. In diesem Fall erhält man eine Brückenschaltung, deren Abgleichzustand völlig unabhängig von den Signalfrequenzen erhalten bleibt. Damit werden im wesentlichen alle Signale, unabhängig von ihrer Frequenz eliminierbar.

Wenn alle Leitungsabschnitte Netzleitungsabschnitte darstellen, besteht eine vorteilhafte Weiterbildung der Erfindung darin, daß der zweite Eingang über einen auf die Netzfrequenz abgestimmten Parallelschwingkreis und einen ohmschen Widerstand an den die Signale aufweisenden Netzleitungsabschnitt angeschlossen ist und daß der dritte und vierte Brückenzweig ausschließlich ohmsche Widerstände aufweist. In diesem Fall erfolgt eine sehr breitbandige Kompensation der Signale, beginnend bei erheblich unterhalb der Netzfrequenz liegenden Signalen bis zu sehr hochfrequenten Signalen, wobei auch in der Umgebung der Netzfrequenz liegende Signale kompensiert werden. Da dem ersten Eingang des Differenzverstärkers das aus einer Überlagerung der Netzfrequenz sowie der im signalbehafteten Netzleitungsabschnitt auftretenden Signale zugeführt ist, dagegen dem zweiten Eingang des Differenzverstärkers über den auf die Netzfrequenz abgestimmten Parallelschwingkereis ein ideal sinusförmiges Signal von Netzfrequenz, erzwingt der Differenzverstärker im Verbindungspunkt der Induktionsspule mit dem von den Signalen freizuhaltenden Netzleitungsabschnitt ebenfalls ein ideal sinusförmiges Signal, das heißt, daß dieser Netzleitungsabschnitt nichts von dem im anderen Netzleitungsabschnitt vorhandenen Signalen mehr « spürt ».

Um die benötigte Ausgangsleistung des Differenzverstärkers niedrig halten zu können, ist es in vielen Fällen tragbar, bewußt auf die Kompensation von niederfrequenten Signalen, die den größten Leitungsanteil haben, zu verzichten. Dies geschieht in einer Weiterbildung der Erfindung dadurch, daß parallel zum Kondensator ein ohmscher Widerstand angeordnet ist, so daß die Abgleichbedingung der Brückenschaltung für niedrige Frequenzen nicht mehr erfüllbar ist. Damit unterbleibt, die Kompensation der niederfrequenten Signale.

Da bei einem über einen Parallelschwingkreis an den einen Netzleitungsabschnitt angeschlossenen Differenzverstärker an diesem zweiten Eingang die volle Netzspannung auftritt, muß ein Differenzverstärker mit entsprechend spannungsfesten Eingängen eingesetzt werden. Dies kann in einer weiteren Ausführungsform der erfindungsgemäßen Schaltungsanordnung dadurch vermieden werden, daß der Differenzverstärker mit einer auf die Netzspannung bezogenen Versorgungspannung gespeist ist.

Eine bevorzugte Ausführungsform der Erfindung für den Fall, daß als Leitung die Netzleitung dient, besteht darin, daß durch Einfügen von weiteren passiven Bauelementen in den dritten und vierten Brückenzweig die Brückenschaltung nur noch für erheblich über der Netzfrequenz liegende Signale abgeglichen ist und daß der zweite Eingang des Differenzverstärkers an den Nulleiter des Netzes als Referenzspannungsquelle angeschlossen ist. Hierbei können als weitere passive Bauelemente Kondensatoren in Reihenschaltung zu den ohmschen Widerständen angeordnet sein. Durch die damit entstehenden RC-Glieder ist die breitbandig abgeglichene Brückenschaltung für niedrige Signalfrequenzen nicht mehr im abgeglichenen Zustand, so daß die Kompensation von Signalen niedriger Frequenz unterdrückt ist und auch zur Unterdrückung der Kompensation der Netzfrequenz kein Parallelresonanzkreis mehr erforderlich ist. Stattdessen kann der zweite Eingang des Differenzverstärkers direkt an den Nulleiter des Netzes angeschlossen sein. Gegenüber einer Schaltungsanordnung, bei der auch Signale niedriger Frequenzen kompensiert werden, kann nunmehr ein Differenzverstärker niedrigerer Ausgangsleistung eingesetzt werden. Ferner kann der Differenzverstärker nunmehr mit niedrigeren, auf den Nulleiter bezogenen Versorgungsspannungen betrieben werden, was die Schaltung vereinfacht bzw. den Einsatz eines lediglich auf niedrige Spannung ausgelegten Differenzverstärkers möglich macht. Der vorzugweise als Operationsverstärker ausgebildete Differenzverstärker kann auch durch einen Transistor ersetzt werden. Eine solche Anordnung verhält sich wie ein Tiefpaßfilter dritter Ordnung.

Bei den bisher erörterten Ausführungsformen der erfindungsgemäßen Schaltungsanordnung wurde der Übergang von Signalen aus dem mit diesen Signalen behafteten Netzleitungsabschnitt in einen anschließenden Netzleitungsabschnitt unterdrückt. Nicht unterdrückt wurde nach den bisherigen Ausführungsformen der Übergang von Signalen aus dem anschließenden Netzleitungsabschnitt, der auch mit Signalen behaftet sein kann und der für diesen Patentanspruch aus Gründen einer einheitlichen Nomenklatur als « an sich von den Signalen freizuhaltender Netzleitungsabschnitt » bezeichnet ist, in den bereits mit Signalen behafteten Netzleitungsabschnitt, der aus Nomenklaturgründen für diesen Patentanspruch als « signalbehafteter Netzleitungsabschnitt » gelten soll. Dies kann jedoch gemäß einer weiteren Ausführungsform der Schaltungsanordnung dadurch bewerkstelligt werden, daß in dem an sich von den Signalen freizuhaltenden Netzleitungsabschnitt in Serie zu der Induktionsspule eine weitere Induktionsspule angeordnet ist, deren der Induktionsspule abgewandter Anschluß über die Reihenschaltung eines Kondensators und eines ohmschen Widerstandes ebenfalls mit dem ersten Eingang des Differenzverstärkers verbunden ist. Damit wird die Passage von hochfrequenten Signalen in beiden Richtungen unterdrückt. Diese Schaltungsanordnung besteht somit aus zwei ineinander verschachtelten Brückenschaltungen, wobei die eine bei den vorstehenden Ausführungsbeispielen an den ersten Eingang des Differenzverstärkers angeschlossene Brückenhälfte, bestehend aus Induktionsspule sowie der Serienschaltung aus Kondensator und ohmschen Widerstand ein zweitesmal vorgesehen und der Induktionsspule vorgeschaltet ist. Damit wird beispielsweise das Abhören von netzleitungsgebundenen Wechselsprechanlagen von Nachbarn und das Eindringen von hochfrequenten Netzstörungen zuverlässig verhindert.

Wenn die auf dem signalführenden oder signalbehafteten Netzleitungsabschnitt vorhandenen Signale beispielsweise zu Kommunikationszwecken genutzt werden, besteht beim Einsatz einer Induktionsspule von zu kleiner Induktivität die Gefahr einer zu starken Belastung der Signalquelle, so daß in diesem Netzleitungsabschnitt die erwünschten Signale in ihrer Amplitutde zu stark absinken oder überhaupt zusammenbrechen. Dies kann gemäß einer weiteren Ausführungsform der Erfindung dadurch ausgeschlossen werden, daß dem die Signale aufweisende Netzleitungsabschnitt das Ausgangssignal des Differenzverstärkers gegenphasig zugeführt ist. Damit wird die Belastung der im signalführenden Netzleitungsabschnitt angeordneten Signalquelle vermindert, so daß in diesem Netzleitungsabschnitt überall ein Signal ausreichender Amplitude zur Verfügung steht. Dies kann in einer bevorzugten Ausführungsform dadurch geschehen, daß an den Ausgang des Differenzverstärkers über einen Widerstand ein Umkehrverstärker angeschlossen ist, dessen Ausgangssignal über die Reihenschaltung eines Kondensators und eines Widerstandes an den die Signale aufweisenden Netzleitungsabschnitt geführt ist.

Wenn bei einem mehrphasigen Netz die Signale auf mindestens einem Netzleitungsabschnitt nur einer Phase vorhanden sind, besteht bei einem für Zwecke der Kommunikation genützten solchen Netz das Problem, diese Signale auch auf Netzleitungsabschnitte der anderen Phasen zu übertragen. Unterstellt wird hierbei, daß der signalführende Netzleitungsabschnitt der einen Phase durch eine Schaltungsanordnung der im vorstehenden Absatz genannten Art mit dem von diesen Signalen freizuhaltenden weiteren Netzleitungsabschnitt der gleichen Phase verbunden ist. Hierbei kann zur Überkopplung der Signale auf einen Netzleitungsabschnitt mindentens einer weiteren Phase auch für diese Phase eine weitere solche Schaltungsanordnung vorgesehen sein, wobei das Ausgangssignal des Differenzverstärkers der der einen Phase zugehörigen Schaltungsanordnung über eine Verbindungsleitung an den Differenzeingang des Umkehrverstärkers der der weiteren Phase zugeordneten Schaltungsanordnung geführt ist. Hierbei kann die Verbindungsleitung ein Hochpaßfilter enthalten.

Die Erfindung wird im folgenden anhand von in den Figuren 1 bis 5 dargestellten Ausführungsbeispielen näher erläutert.

Dabei zeigt :

Figur 1   ein erstes Ausführungsbeispiel der erfindungsgemäßen Schaltungsanordnung zur Unterdrückung des Signalflusses aus einem signalbehafteten Netzleitungsabschnitt auf einen von diesem Signal freizuhaltenden Netzleitungsabschnitt, wobei auch Signale niedriger Frequenz unterdrückt werden,

Figur 2   ein zweites Ausführungsbeispiel der erfindungsgemäßen Schaltungsanordnung, bei der der Übergang von Signalen niedriger Frequenz nicht unterdrückt ist,

Figur 3   ein drittes Ausführungsbeispiel der Erfindung, bei dem der Signalübergang von Signalen nicht zu niedriger Frequenz in beiden Richtungen unterdrückt ist,

Figur 4   eine Weiterbildung des in Fig. 2 dargestellten Ausführungsbeispiels, bei dem eine zu hohe Belastung des in dem signalführenden Netzleitungsabschnitt untergebrachten Signalgebers durch eine Induktionsspule sehr kleiner Induktivität durch weitere schaltungstechnische Maßnahmen ausgeschlossen ist und

Figur 5   ein auf der Fig. 4 basierendes Ausführungsbeispiel, bei dem die in einem signalführenden Netzleitungsabschnitt einer Phase vorhandenen Signale unter Nutzung von zwei Schaltungsanord-

0 082 410

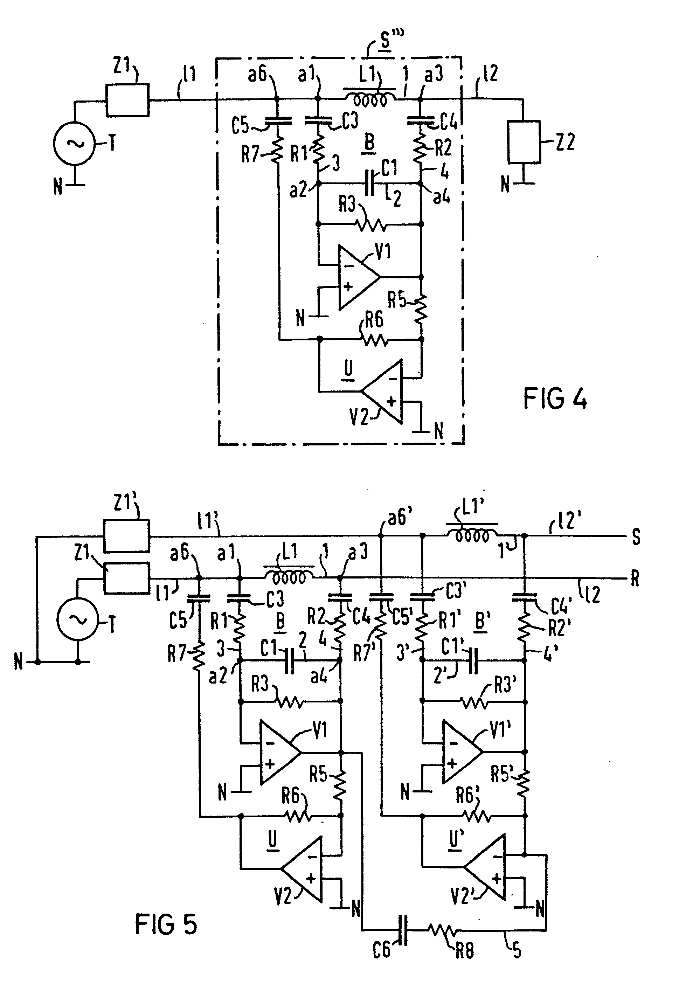

nungen nach dem in Fig. 4 dargestellten Ausführungsbeispiel auf einen Netzleitungsabschnitt einer weiteren Netzphase eines mehrphasigen Netzes übergekoppelt werden.

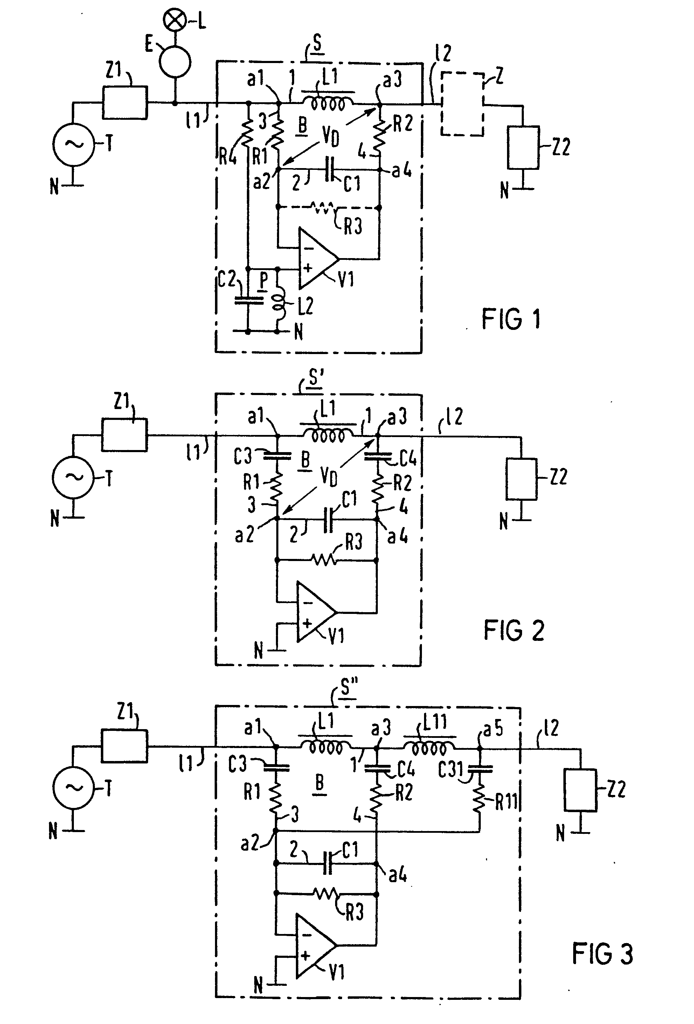

Bei dem in Fig. 1 dargestellten Ausführungsbeispiel ist mit I1 ein erster Leitungsabschnitt bezeichnet, der die Gesamtheit der in einer Wohnung installierten Netzleitungen, beispielsweise der Phase R, darstellt. Mit I2 ist ein zweiter Leitungsabschnitt bezeichnet, der die außerhalb der Wohnung befindlichen, dem EVU zuzurechnenden Netzleitungen der gleichen Phase bezeichnet. Die Netzleitungsimpedanz des Wohnung ist mit Z1, die Netzleitungsimpedanz des außerhalb der Wohnung befindlichen Leitungsabschnittes mit Z2 bezeichnet. In der Wohnung ist ein Kommunikationssystem zur Verteilung von Informationen vorhanden, bei dem ein Sender T mit einer Frequenz von mehr als 30 kHz verschlüsselte Informationen als amplitudenmodulierte Signale in den ersten Leitungsabschnitt I1 einspeist, so daß diese an beliebiger Stelle aus dem wohnungseigenen Stromversorgungsnetz der Phase R entnommen werden können und über einen Empfänger F, beispielsweise zur Schaltung von Beleuchtungskörpern L, zur Verfügung stehen. Anstelle einer solchen Fernschaltanlage kann natürlich auch an den ersten Leitungsabschnitt I1 eine mit frequenzmodulierten Signalen arbeitende Wechselsprechanlage angeschlossen sein. Um nun die Störung gleichartiger Anlagen in Nachbarwohnungen auszuschließen, ist es erforderlich, die im ersten Netzleitungsabschnitt I1 vorhandenen Signale auf diesen Netzleitungsabschnitt I1 zu begrenzen und damit den zweiten Netzleitungsabschnitt I2 von solchen Signalen freizuhalten.

Zu diesem Zweck ist die gestrichelt umrandete Schaltungsanordnung S vorgesehen. Im Rahmen dieser Schaltungsanordnung sind die beiden Netzleitungsabschnitte I1 und I2 durch eine mit einem Kern versehene Induktionsspule L1 miteinander verbunden. Die Induktionsspule L1 liegt im ersten Zweig 1 einer Wheatstone'schen Brückenschaltung B, in deren zweitem, dazu parallel angeordneten Brückenzweig 2 ein Kondensator C1 angeordnet ist. Der dem signalführenden Netzleitungszweig I1 zugewandte Anschluß a1 des Brückenzweiges 1 ist über den einen ohmschen Widerstand R1 enthaltenden dritten Brückenzweig 3 mit dem dem signalführenden Netzleitungszweig I1 zugewandten Anschluß a2 des zweiten Brückenzweiges verbunden. Der mit dem von den Signalen freizuhaltenden Netzleitungsabschnitt I2 verbundene Anschluß a3 der Induktionsspule L1 ist über den vierten, einen ohmschen Widerstand R2 enthaltenden Brückenzweig 4 mit dem dem Netzleitungsabschnitt L2 zugewandten Anschluß a4 des Brückenzweiges 2 verbunden.

Diese Brückenschaltung B, bestehend aus den Elementen L1, C1, R1 und R2 stellt eine breitbandig abgleichbare oder breitbandkompensierte Brückenschaltung dar. Die Abgleichbedingung für die Brückenschaltung, bei der die zwischen den Anschlüssen a2 und a3 auftretende Diagonalspannung $V_D$ zu Null wird, lautet nämlich :

$$j\omega L1/R2 = R1/(1/j\omega)(1).$$

Hieraus ergibt sich für L1 :

$$L1 = R1 \cdot R2 \cdot C1$$

Damit ist ersichtlich, daß die Abgleichbedingung völlig frequenzunabhängig ist, so daß die einmal abgeglichene Brückenschaltung bei allen an den Anschlüssen a1 und a4 auftretenden Frequenzen in diesem angeglichenen Zustand verbleibt, bei dem die Diagonalspannung $V_D$ den Wert Null aufweist.

Der dem einen Anschluß der Brückendiagonale entsprechende Anschluß a2 ist an den invertierenden Eingang eines als Differenzverstärker eingesetzten Operationsverstärkers V1 geführt. Der Ausgang dieses Operationsverstärkers V1 ist mit Anschluß a4 der Brückenschaltung B verbunden. Der nichtinvertierende Anschluß des Operationsverstärkers V1 ist an den einen Anschluß des aus dem Kondensator C2 und der Induktionsspule L2 bestehenden Parallelresonanzkreises P angeschlossen, dessen zweiter Anschluß mit dem Nulleiter des Netzes verbunden ist. Darüber hinaus ist der nichtinvertierende Eingang des Operationsverstärkers V1 über den ohmschen Widerstand R4 mit dem Netzleitungsabschnitt I1 verbunden. Dieser Widerstand R4 legt die Güte des Parallelresonanzkreises P fest.

Der Operationsverstärker V1 stellt somit einen gegengekoppelten Netzverstärker dar, wobei der Gegenkopplungszweig durch die Brückenschaltung B gebildet ist. Der Parallelresonanzkreis P ist auf die Netzfrequenz von 50 Hz abgestimmt. Falls die beiden Netzleitungsabschnitte I1 und I2 nicht zur Übertragung elektrischer Energie, sondern zur Übertragung eines anderen Wechselspannungssignals dienen, ist der Parallelresonanzkreis auf die Frequenz dieses Wechselspannungssignals abzustimmen.

Im folgenden soll die Wirkungsweise dieser aus der Brükkenschaltung B, dem Operationsverstärker V1, dem Parallelresonanzkreis P sowie dem Widerstand R4 bestehenden Kompensationsschaltung erläutert werden. Hierbei sei zunächst angenommen, die auf dem Netzleitungsabschnitt I1 vorhandenen Signale lägen in einem Frequenzbereich von etwa 100 kHz. Für diese Signalfrequenz stellt der Kondensator C2 des Parallelresonanzkreises P praktisch einen Kurzschluß dar, so daß am nichtinvertierenden Eingang des Operationsverstärkers V1 eine ideal sinusförmige Spannung mit Netzfrequenz ansteht. Am invertierenden Eingang des Operationsverstärkers V1 steht zunächst (bei fiktiver Unwirksamkeit von V1) die durch die im Netzleitungsabschnitt I1 vorhandenen Signale deformierte und damit nicht mehr ideale sinusförmige Netzspannung an. Der gegengekoppelte Operationsverstärker V1 liefert

5

**0 082 410**

nun ausgangsseitig einen solchen Strom, daß die Differenz der an seinen beiden Eingängen anstehenden Spannungen zu Null wird. Dies ist dann der Fall, wenn auch das am Anschluß a2 der Brückenschaltung B anstehende Signal exakt dem idealen sinusförmigen Signal am nichtinvertierenden Eingang entspricht. Da die Brückenschaltung B sich im abgeglichenen Zustand befindet, bei dem die an der Bruckendiagonale zwischen den Anschlüssen a2 und a3 auftretende Diagonalspannung $V_D$ zu Null wird, muß auch an dem Anschluß a3 eine ideale, von den im ersten Netzleitungsabschnitt l1 vorhandenen Signalen befreite sinusförmige Spannung vorhanden sein. Damit werden also unter der Wirkung des gegengekoppelten Operationsverstärkers V1 die die Induktionsspule L1 nur abgeschwächt passierenden Signale des Netzleitungsabschnittes l1 vollständig kompensiert. Für niederfrequente Signale des Netzleitungsabschnittes l1 gilt eine analoge Überlegung, da sie durch die Induktionsspule L2 des Parallelresonanzkreises P kurzgeschlossen werden.

Allerdings tritt an den Eingängen des Operationsverstärkers V1 die volle Netzspannung auf, so daß entweder ein Operationsverstärker mit entsprechend spannungsfesten Eingängen zu verwenden ist, oder der Operationsverstärker durch eine auf die Netzspannung bezogene Versorgungsspannung zu speisen ist.

Die Induktionsspule L1 kann damit eine sehr kleine Induktivität, beispielsweise einige $\mu H$ aufweisen, wobei die Grenze nur durch die Leistung gegeben ist, die der Operationsverstärker zur Verfügung stellen kann und die auch direkt abhängig von der Leistung der zu kompensierenden Signale ist. Um einen Operationsverstärker V1 relativ niedriger Leistung einsetzen zu können, kann bewußt auf die Kompensation von niederfrequenten Signalen verzichtet werden, die den größten Leistungsanteil haben. Dies kann dadurch geschehen, daß der Kondensator C1 im zweiten Brückenzweig durch einen ohmschen Widerstand überbrückt wird. Die Kompensationswirkung tritt dann erst ab einer unteren Grenzfrequenz $f_g$ ein, wobei

$$f_g = 1/(2 \cdot \pi \cdot R3 \cdot C1)$$

ist. Der ohmsche Widerstand R3 ist in Fig. 1 gestrichelt eingezeichnet.

Ebenfalls gestrichelt eingezeichnet ist in Fig. 1 im Netzleitungsabschnitt l2 der Elektrizitätszähler Z, der vom EVU der Wohnung zugeordnet ist.

Bei den in den Figuren 2 bis 4 dargestellten Ausführungsbeispielen sind für die mit Fig. 1 übereinstimmenden Bauelemente und Baueinheiten übereinstimmende Bezugszeichen gewählt. Es sei betont, daß die erfindungsgemäße Schaltungsanordnung, die im folgenden in Verbindung mit Netzleitungen beschrieben ist, auch in Verbindung mit beliebigen elektrischen Leitungen, selbst solchen, die a priori kein Signal führen, verwendbar ist.

Bei dem in Fig. 2 dargestellten Ausführungsbeispiel ist die erfindungsgemäße Schaltungsanordnung gestrichelt umrandet und mit dem Bezugszeichen S' bezeichnet. In diesem Ausführungsbeispiel ist die Kompensation der niedrigen Frequenzen unterdrückt. Dies geschieht dadurch, daß zusätzlich zu dem RC-Glied C1R1 im zweiten Brückenzweig durch Einfügen des Kondensators C3 in den dritten Brückenzweig und des Kondensators C4 in den vierten Brückenzweig der Brückenschaltung B zwei zusätzliche RC-Glieder R1C1 und R2C4 gebildet sind. Damit entfällt die Notwendigkeit für den in Fig. 1 noch vorhandenen, aus dem Kondensator C2 und der Induktionsspule L2 bestehenden Parallelresonanzkreis sowie dessen Anbindung durch den die Güte dieses Parallelresonanzkreises P bestimmenden ohmschen Widerstand R4 an den signalbehafteten Leitungsabschnitt l1. Stattdessen wird der nichtinvertierende Eingang des Operationsverstärkers V1 direkt an den Nulleiter N des elektrischen Netzes angeschlossen, da nunmehr die Unterdrückung der Kompensation der Netzfrequenz durch den Parallelresonanzkreis P verzichtbar ist. Damit kann der Operationsverstärker V1 nunmehr mit einer niedrigen, auf den Nulleiter N des Netzes bezogenen Versorgungsspannung betrieben werden. In diesem Fall kann der Operationsverstärker V1 auch durch einen Transistor ersetzt werden. Es liegt ein Verhalten wie bei einem Tiefpaßfilter dritter Ordnung vor. Der Operationsverstärker V1 erzwingt — was hochfrequente Signale im kHz-Bereich anlagt — im Anschluß a3, in dem die Induktionsspule L1 mit dem von diesen Signalen freizuhaltenden Netzleitungsabschnitt l2 verbunden ist, die Amplitude Null dieser hochfrequenten Signale, da an seinem nichtinvertierenden Eingang ebenfalls die Spannung Null ansteht, und da die Brückenschaltung B zwarbreitbandig, aber nur für den genannten Bereich hoher Frequenzen abgeglichen ist. Im Bereich niedriger Frequenzen und damit auch im Frequenzbereich der Netzspannung ist die Kompensationswirkung unterdrückt.

Bei den in den Fig. 1 und 2 beschriebenen Ausführungsbeispielen ist eine volle Wirksamkeit lediglich für die Unterdrückung des Übergangs von Signalen aus dem signalbehafteten Leitungsabschnitt l1 in den von den Signalen freizuhaltenden Netzleitungsabschnitt l2 gegeben. Von außen kommende, auf dem Netzleitungsabschnitt l2 vorhandene Signale können jedoch unter der Wirkung der Induktionsspule L1 abgeschwächt in den Netzleitungsabschnitt l1 übergehen und dort unter ungünstigen Umständen zur Störung des dort wirksamen Kommunikationssystems führen. Dies kann ausgeschlossen werden, wenn das in Fig. 2 dargestellte Ausführungsbeispiel durch weitere schaltungstechnische Maßnahmen ergänzt wird.

Dies ist in Fig. 3 dargestellt. Die Schaltungsanordnung S'', die gestrichelt umrandet ist, weist in diesem Fall zusätzlich eine weitere Induktionsspule L11 auf, die der Induktionsspule L1 im Hinblick auf

den Netzleitungsabschnitt l2 seriell vorgeschaltet ist. Der Anschluß a5, in dem die Zusatzinduktionsspule L11 mit dem Netzleitungsabschnitt l2 verbunden ist, ist über den ohmschen Widerstand R11 und den wahlweise in Serie dazu angeordneten Kondensator C31 an den Anschluß a2 und damit an den invertierenden Eingang des Operationsverstärkers V1 angeschlossen. Damit entstehen zwei ineinander verschachtelte Brückenschaltungen, wobei die aus der Induktionsspule L1 sowie dem ohmschen Widerstand R1 und dem Kondensator C3 bestehende Brückenhälfte der Brückenschaltung B ein zweitesmal vorgesehen ist und zwar dieses Mal in Richtung auf den Netzleitungsabschnitt l2 hin. In diesem Fall « sieht » der invertierende Eingang des Operationsverstärkers V1 auch die aus dem Netzleitungsabschnitt l2 einlaufenden hochfrequenten Signale, so daß unter der Gegenkopplungswirkung des Operationsverstärkers V1 im Punkt a3 auch diese Signale unterdrückt werden. Damit ist die Passage dieser Signale durch die Induktionsspule L1 in den Netzleitungsabschnitt l1 wirksam unter-drückt. Somit können beispielsweise die Signale von an den Leitungsabschnitt l2 gebundenen Wechselsprechanlagen im Netzleitungsabschnitt l1 nicht mehr abgehört werden.

Wenn es sich bei den im Netzleitungsabschnitt l1 vorhandenen Signalen um Signale handelt, die im Rahmen eines an den Netzleitungsabschnitt l1 gebundenen Kommunikationssystems — sei es eine Wechselsprechanlage oder eine Fernschaltanlage — genutzt werden, besteht bei der Wahl einer Induktionsspule L1 sehr kleiner Induktivität die Gefahr, daß die Signalquelle T zu stark belastet wird, so daß erhebliche Intensitätseinbußen im Signalpegel auftreten, die die einwandfreie Funktion dieser Kommunikationssysteme beeinträchtigen können.

Bei dem in Fig. 4 dargestellten Ausführungsbeispiel ist diese Gefahr ausgeschlossen. Die Schaltungsanordnung S''' umfaßt die in Fig. 2 dargestellte Schaltungsanordnung S', die jedoch hier durch weitere schaltungsrechnische Maßnahmen ergänzt ist. Zu diesem Zweck ist ein Umkehrverstärker U vorgesehen, der über den ohmschen Widerstand R5 an den Ausgang des Operationsverstärkers V1 angeschlossen ist. Der Umkehrverstärker U umfaßt einen Operationsverstärker V2, dessen nichtinvertierender Eingang an den Nulleiter des elektrischen Netzes gelegt ist, wohingegen der invertierende Eingang mit dem ohmschen Widerstand R5 verbunden ist. Im Überbrückungszweig des Operationsverstärkers V2 ist der ohmsche Widerstand R6 angeordnet. Das Ausgangssignal des Umkehrverstärkers U ist über die Serienschaltung eines ohmschen Widerstandes R7 und eines Kondensators C5 an den Anschluß a6, der mit dem Anschluß a1 gleichwertig ist, des signalführenden Leitungsabschnittes l1 geführt. Damit wird der dem Anschluß a3 zugeführte Kompensationsstrom gegenphasig dem Anschluß a6 zugeführt, so daß die an den Leitungsabschnitt l1 im Rahmen eines Kommunikationssystems angekoppelte Signalquelle T nur im minderen Umfang belastet wird. Wird bei der Dimensionierung der Widerstände die Beziehung

$$R7/R2 = R6/R5$$

beachtet, dann wird die Signalquelle T nur durch den Widerstand R1 belastet, der hochohmig wählbar ist.

Bei den im Vorstehenden erörterten Ausführungsbeispielen wurde davon ausgegangen, daß der signalführende Leitungsabschnitt l1 sowie der von diesen Signalen freizuhaltende Leitungsabschnitt l2 der Netzphase R zugehörig ist. Für ein in einer Wohnung oder einem Gebäude installiertes Kommunika-tionssystem ist es jedoch erforderlich, daß die die Information tragenden Signale nicht nur von einer Netzphase, sondern von allen Netzphasen abgreifbar sind. Die Übertragung der im Leitungsabschnitt l1 der Netzphase R vorhandenen Signale auf den Netzleitungsabschnitt l1' der beispielhaft gewählten Phase S ist in Fig. 5 veranschaulicht. Die beiden Netzleitungsabschnitte l1 und l2 der Netzphase R sind hierbei jeweils durch eine in Fig. 4 veranschaulichte Schaltungsanordnung miteinander verbunden. Die beiden Leitungsabschnitte l1' und l2' der Netzphase S sind durch eine baugleiche Schaltungsanordnung miteinander verbunden, wobei die mit der vorgenannten Schaltungsanordnung übereinstimmenden Elemente lediglich mit einem durch einen Apostroph ergänzten Bezugszeichen versehen sind. Zur Übertragung der im Netzleitungsabschnitt l1 der Phase R vorhandenen Signale auf den Netzleitungsabschnitt l1' der Phase S ist hierbei das Ausgangssignal des Operationsverstärkers V1, welcher der der Phase R zugeordneten Schaltungsanordnung zugehörig ist, über die Verbindungsleitung 5 dem invertierenden Eingang des als Umkehrverstärker U' beschalteten Operationsverstärkers V2', welcher der der Phase S zugeordneten Schaltungsanordnung zugehörig ist, zugeführt. In der Verbindungsleitung 5 sind als Hochpaßfilter in Reihenschaltung der Kondensator C6 und der ohmsche Widerstand R8 angeordnet. Das mit den Signalen im signalführenden Leitungsabschnitt l1 der Phase R korrelierte und der Kompensation des die Induktionsspule L1 passierenden Restsignals dienende Ausgangssignal des Operationsverstärkers V1 wird damit nach Invertierung im Umkehrverstärker V2' über ohmschen Widerstand R7' und den nachgeschalteten Koppelkondensator C5' im Anschluß a6' auf den Leitungsabschnitt l1' der Phase S übertragen, so daß es in diesem Leitungsabschnitt ebenfalls für Kommunikationszwecke zur Verfügung steht.

## Patentansprüche

1. Schaltungsanordnung zur Unterdrückung von Signalen auf Leitungsabschnitten (l1 ; l2), wobei an

# 0 082 410

der Verbindungsstelle eines Leitungsabschnitts (I1), auf dem die Signale auftreten und eines Leitungsabschnitts (I2), auf dem die Signale unterdrückt werden sollen, eine Induktionsspule (L1) seriell eingefügt ist, dadurch gekennzeichnet, daß eine elektrische Kompensationseinrichtung (B, V1) vorgesehen ist, die an der Verbindungsstelle der Induktionsspule (L1) mit dem Leitungsabschnitt (I1), auf dem die Signale zu unterdrücken sind, ein die Signale kompensierendes Kompensationssignal einspeist.

2. Schaltungsanordnung nach Anspruch 1, dadurch gekennzeichnet, daß die Kompensationseinrichtung eine breitbandig abgleichbare Wheatstone'sche Brückenschaltung (B) enthält, in deren erstem Brückenzweig (1) die Induktionsspule (L1) und in derem zweitem, dazu parallelen Brückenzweig (2) ein Kondensator (C1) angeordnet ist, wobei der die Signale aufweisende Leitungsabschnitt (I1) über einen dritten Brückenzweig (3) mit dem einen Anschluß (a2) des Kondensators (C2) und der von den Signalen freizuhaltende Leitungsabschnitt (I2) über einen vierten Brückenzweig (4) mit dem anderen Anschluß (a4) des Kondensators (C1) verbunden ist, daß die Kompensationseinrichtung ferner einen Differenzverstärker (V1) aufweist, dessen erster Eingang (−) an das durch den Verknüpfungspunkt (a2) des zweiten (2) und dritten Brückenzweigs (3) gebildete eine Ende der Brückendiagonale (a2-a3) und dessen Ausgang an den Verknüpfungspunkt (a4) des zweiten (2) und vierten Brückenzweiges (4) angeschlossen ist, und daß der zweite Eingang (+) des Differenzverstärkers (V1) an eine Referenzspannung (N) angeschlossen ist, die im Frequenzbereich der Signale den Wert Null aufweist.

3. Schaltungsanordnung nach Anspruch 2, dadurch gekennzeichnet, daß der dritte und vierte Brückenzweig (3, 4) jeweils zumindes einen ohmschen Widerstand (R1, R2) enthält.

4. Schaltungsanordnung nach Anspruch 3, wobei die Leitungsabschnitte Netzleitungsabschnitte darstellen, dadurch gekennzeichnet, daß der zweite Eingang (+) des Differenzverstärkers (V1) über einen auf die Netzfrequenz abgestimmten Parallelschwingkreis (P) und einen ohmschen Widerstand (R4) an den die Signale aufweisenden Netzleitungsabschnitt (I1) angeschlossen ist und daß der dritte und vierte Brückenzweig (3, 4) ausschließlich ohmsche Widerstände (R1, R2) aufweist.

5. Schaltungsanordnung nach Anspruch 4, dadurch gekennzeichnet, daß parallel zum Kondensator (C1) ein ohmscher Widerstand (R3) angeordnet ist.

6. Schaltungsanordnung nach Anspruch 3 oder 4, dadurch gekennzeichnet, daß der Differenzverstärker (V1) mit einer auf die Netzspannung bezogenen Versorgungsspannung gespeist ist.

7. Schaltungsanordnung nach Anspruch 3 oder 5, dadurch gekennzeichnet, daß durch Einfügen von weiteren passiven Bauelementen (C3, C4) in den dritten und vierten Brückenzweig (3, 4) die Brückenschaltung (B) nur noch für erheblich über der Netzfrequenz liegende Signale abgeglichen ist und daß der zweite Eingang (+) des Differenzverstärkers (V1) an den Nulleiter (N) des Netzes als Referenzspannungsquelle angeschlossen ist.

8. Schaltungsanordnung nach Anspruch 7, dadurch gekennzeichnet, daß als weitere passive Bauelemente Kondensatoren (C3, C4) in Reihenschaltung zu den ohmschen Widerständen (R1, R2) angeordnet sind.

9. Schaltungsanordnung nach Anspruch 7 oder 8, dadurch gekennzeichnet, daß in dem an sich von den Signalen freizuhaltenden Netzleitungsabschnitt (I2) in Serie zu der Induktionsspule (L1) eine weitere Induktionsspule (L11) angeordnet ist, deren der Induktionsspule (L1) abgewandter Anschluß (a5) über die Reihenschaltung eines Kondensators (C31) und eines ohmschen Widerstandes (R11) ebenfalls mit dem ersten Eingang (−) des Differenzverstärkers (V1) verbunden ist (Fig. 3).

10. Schaltungsanordnung nach einem der Ansprüche 7 bis 9, dadurch gekennzeichnet, daß dem die Signale aufweisenden Netzleitungsabschnitt (I1) das Ausgangssignal des Differenzverstärkers (V1) gegenphasig zugeführt (a6) ist (Fig. 4).

11. Schaltungsanordnung nach Anspruch 10, dadurch gekennzeichnet, daß an den Ausgang des Differenzverstärkers (V1) über einen Widerstand (R5) ein Umkehrverstärker (U) angeschlossen ist, dessen Ausgangssignal über die Reihenschaltung eines Kondensators (C5) und eines Widerstandes (R7) an den die Signale aufweisenden Netzleitungsabschnitt (I1) geführt (a6) ist (Fig. 4).

12. Schaltungsanordnung nach einem der Patentansprüche 10 oder 11, wobei bei einem mehrphasigen Netz die Signale auf mindestens einem Netzleitungsabschnitt nur einer Phase vorhanden sind, dadurch gekennzeichnet, daß zur Überkopplung der Signale auf einen Netzleitungsabschnitt (I1′) mindestens einer weiteren Phase (S) auch für diese Phase eine weitere solche Schaltungsanordnung (B′, V1′, U′, C5′, R7′) vorgesehen ist, wobei das Ausgangssignal des Differenzverstärkers (V1) der der einen Phase (R) zugehörigen Schaltungsanordnung (B, V1, U, C5, R7) über eine Verbindungsleitung (5) den den Differenzeingang (−) des Umkehrverstärkers (U′) der der weiteren Phase (S) zugeordneten Schaltungsanordnung geführt ist (Fig. 5).

## Claims

1. A circuit for the suppression of signals on line sections (I1 ; I2), wherein a series induction coil (L1) is inserted at the junction between a line section (I1) on which the signals occur and a line section (I2) on which the signals are to be suppressed, characterised in that an electrical compensation device (B, V1) is provided, which supplies a correction signal compensating the signals at the junction of the induction coil (L1) and the line section (I1), on which the signals are to be suppressed.

8

**0 082 410**

2. A circuit as claimed in Claim 1, characterised in that the compensation device comprises a Wheatstone's bridge circuit (B) which can be adjusted in a wide-band fashion and in whose first bridge arm (1) is arranged the induction coil (L1) and in whose second bridge arm (2) parallel thereto is arranged a capacitor (C1), where the line section (I1) having the signals is connected to the one terminal (a2) of the capacitor (C2) by means of a third bridge arm (3) and the line section (I2) which is to be kept free of the signals is connected to the other terminal (a4) of the capacitor (C1) by means of a fourth bridge arm (4), that the compensation device further possesses a difference amplifier (V1), whose first input (−) is connected to the one end of the bridge diagonal (a2-a3) formed by the connecting point (a2) of the second (2) and third bridge arm (3), and whose output is connected to the connecting point (a4) of the second (2) and fourth bridge arms (4), and that the second input (+) of the difference amplifier (V1) is connected to a reference voltage (N) which has the value zero in the frequency range of the signals.

3. A circuit as claimed in Claim 2, characterised in that the third and fourth bridge arms (3, 4) respectively comprises at least one Ohmic resistance (R1, R2).

4. A circuit as claimed in Claim 3, wherein the line sections represent mains line sections, characterised in that the second input (+) of the difference amplifier (V1) is connected to the mains line sections (I1), which has the signals, by means of a parallel oscillatory circuit (P) tuned to the mains frequency, and an Ohmic resistance (R4), and that the third and fourth bridge arms (3, 4) exclusively have Ohmic resistances (R1, R2).

5. A circuit as claimed in Claim 4, characterised in that an Ohmic resistance (R3) is arranged parallel to the capacitor (C1).

6. A circuit as claimed in Claim 3 or 4, characterised in that that the difference amplifier (V1) is fed with a supply voltage which is related to the mains voltage.

7. A circuit as claimed in Claim 3 or 5, characterised in that the bridge circuit (B) is adjusted for signals which lie considerably above the mains frequency by inserting further passive components (C3, C4) into the third and fourth bridge arms (3, 4), and that the second input (+) of the difference amplifier (V1) is connected to the zero conductor (N) of the network as a reference voltage source.

8. A circuit as claimed in Claim 7, characterised in that capacitors (C3, C4) are arranged in a series-connection to the Ohmic resistances (R1, R2) as further passive components.

9. A circuit as claimed in Claim 7 or 8, characterised in that in the mains line section (I2), which is to be kept free of signals per se, a further induction coil (L11) is arranged in series with the induction coil (L1), the terminal (a5) of which induction coil (L11), remote from the induction coil (L1), is likewise connected to the first input (−) of the difference amplifier (V1) by means of the series connection of a capacitor (C31) and an Ohmic resistance (R11), (Fig. 3).

10. A circuit as claimed in one of Claims 7 to 9, characterised in that the output signal of the difference amplifier (V1) is fed to the mains line section (I1), which possesses the signals, in phase opposition (a6), (Fig. 4).

11. A circuit as claimed in Claim 10, characterised in that a reversing amplifier (U) is connected to the output of the difference amplifier (V1) by means of a resistance (R5), the output signal of which reversing amplifier is fed (a6) to the mains line section (I1), which possesses the signals, by means of the series connection of a capacitor (C5) and a resistance (R7), (Fig. 4).

12. A circuit as claimed in one of Patent Claims 10 or 11, where in the case of a multi-phase network the signals are present on at least one mains line section of only one phase, characterised in that in order to couple the signals on a mains line section (I1′) of at least one further phase (S) a further circuit of this kind (B′, V1′, U′, C5′, R7′) is provided for this phase, where the output signal of the difference amplifier (V1) of the circuit (B, V1, U, C5, R7), which is assigned to the one phase (R), is fed via a connection line (5) to the difference input (−) of the reversing amplifier (U′) of the circuit which is assigned to the further phase (S), (Fig. 5).

**Revendications**

1. Montage pour supprimer des signaux sur des sections de lignes (I1 ; I2), avec intercalation d'une bobine d'inductance (L1) en série au point de jonction d'une section de ligne (I1) où se produisent les signaux et d'une section de ligne (I2) où les signaux sont à supprimer, caractérisé par la prévision d'un dispositif de compensation électrique (B, V1) qui injecte un signal de compensation, compensant les signaux, au point de jonction de la bobine d'inductance (L1) avec la section de ligne (I1) où les signaux sont à supprimer.

2. Montage selon la revendication 1, caractérisé en ce que le dispositif de compensation comporte un circuit en pont de Wheatstone (B) pouvant être équilibré sur une large bande, dans la première branche (1) duquel est disposée la bobine d'inductance (L1) et dans la seconde branche (2) duquel, qui est parallèle à la première, est disposé un condensateur (C1), la section de ligne (I1) présentant les signaux étant reliée à travers une troisième branche (3) du pont à une borne (a2) du condensateur (C1) et la section de ligne (I2) à maintenir exempte de signaux étant reliée à travers une quatrième branche (4) du pont à l'autre borne (a4) du condensateur (C1), que le dispositif de compensation présente en outre un amplificateur différenciateur (V1) dont la première entrée (−) est connectée à l'extrémité de la diagonale

9

du pont (a2-a3) formée par la jonction (a2) de la seconde (2) et de la troisième branche (3) du pont et dont la sortie est connectée à la jonction (a4) de la seconde (2) et de la quatrième branche (4) du pont, et que la deuxième entrée (+) de l'amplificateur différenciateur (V1) est connectée à une tension de référence (N) qui présente la valeur zéro dans la bande de fréquences des signaux.

3. Montage selon la revendication 2, caractérisé en ce que les troisième et quatrième branches (3, 4) contiennent chacune au moins une résistance ohmique (R1, R2).

4. Montage selon la revendication 3, où les sections de lignes sont des sections de lignes du secteur, caractérisé en ce que la deuxième entrée (+) de l'amplificateur différenciateur (V1) est connectée à la section de ligne du secteur (I1) présentant les signaux, à travers un circuit parallèle (P) accordé sur la fréquence du secteur et à travers une résistance ohmique (R4), et que les troisième et quatrième branches (3, 4) du pont présentent uniquement des résistances ohmiques (R1, R2).

5. Montage selon la revendication 4, caractérisé en ce qu'une résistance ohmique (R3) est disposée parallèlement au condensateur (C1).

6. Montage selon la revendication 3 ou 4, caractérisé en ce que l'amplificateur différenciateur (V1) est alimenté avec une tension d'alimentation rapportée à la tension du secteur.

7. Montage selon la revendication 3 ou 5, caractérisé en ce que, par suite de l'insertion d'autres composants passifs (C3, C4) dans les troisième et quatrième branches (3, 4) du pont, le circuit en pont (B) n'est plus équilibré que pour des signaux de fréquence considérablement supérieure à la fréquence du secteur et que la deuxième entrée (+) de l'amplificateur différenciateur (V1) est connectée au conducteur neutre (N) du secteur comme source de tension de référence.

8. Montage selon la revendication 7, caractérisé en ce que les autres composants actifs sont des condensateurs (C3, C4) disposés en série avec les résistances ohmiques (R1, R2).

9. Montage selon la revendication 7 ou 8, caractérisé en ce qu'une bobine d'inductance supplémentaire (L11) est disposée en série avec la première bobine d'inductance (L1) dans la section de ligne (I2) du secteur à maintenir en soi exempte des signaux, dont la borne (a5) du côté éloigné de la première bobine d'inductance (L1), à travers le montage en série d'un condensateur (C31) et d'une résistance ohmique (R11), est également connectée à la première entrée (−) de l'amplificateur différenciateur (V1) (Fig. 3).

10. Montage selon une des revendications 7 à 9, caractérisé en ce que le signal de sortie de l'amplificateur différenciateur (V1) est appliqué (a6) en opposition de phase à la section de ligne du secteur présentant les signaux (I1) (Fig. 4).

11. Montage selon la revendication 10, caractérisé en ce qu'il comprend un amplificateur inverseur (U) connecté à travers une résistance (R5) à la sortie de l'amplificateur différenciateur (V1) et dont le signal de sortie est appliqué (a6) à travers le montage en série d'un condensateur (C5) et d'une résistance (R7) à la section de ligne du secteur présentant les signaux (I1) (Fig. 4).

12. Montage selon la revendication 10 ou 11, où les signaux sont présents sur au moins une section de ligne de seulement une phase d'un secteur pluriphasé, caractérisé en ce que, pour l'application des signaux à une section de ligne (I1') d'au moins une autre phase (S) du secteur, un montage supplémentaire (B', V1', U', C5', R7') de ce type est prévu également pour cette phase, le signal de sortie de l'amplificateur différenciateur (V1) du montage appartenant à la première phase (R) étant transmis à travers une ligne de liaison (5) à l'entrée de différence (−) de l'amplificateur inverseur (U') du montage associé à l'autre phase (S) (Fig. 5).

FIG 1

FIG 2

FIG 3

0 082 410

FIG 4

FIG 5

2